# EUROPÄISCHE PATENTANMELDUNG

(11) **EP 1 731 944 A1**
(43) Veröffentlichungstag der Anmeldung: **13.12.2006**
(21) Anmeldenummer: 06011160.6
(22) Anmeldetag: 31.05.2006
(51) Int. Cl.: G02B 27/64, G02B 23/00

(54) **Fernglas**

(30) Priorität: 09.06.2005 DE 102005027867
(71) Anmelder: Carl Zeiss Sports Optics GmbH, 35576 Wetzlar (DE)
(72) Erfinder: Baumann, Oliver, Dr., 73430 Aalen (DE); Felgenhauer, Klaus, 35581 Wetzlar (DE); Gerth, Stefan, 35764 Sinn (DE); Knupfer, Klaus, Dr., 73457 Essingen (DE); Schwab, Walter J., 35625 Hüttenberg (DE); Tautz, Volker, Dr.-Ing., 35578 Wetzlar (DE)
(74) Vertreter: Witte, Alexander

(57) **Zusammenfassung**

Ein Fernglas (70) weist mindestens einen Tubus (71') auf. In dem Tubus (71') sind entlang dessen Längsachse (72) hintereinander mindestens drei optische Elemente angeordnet, nämlich ein Objektiv (74'), ein Umkehrsystem (76'), sowie ein Okular (78'). Ferner sind Mittel vorgesehen zum Ausgleich von Verwacklungen des Tubus (71') durch Bewegen mindestens eines der optischen Elemente relativ zum Tubus. Das Objektiv (74') und das Okular (78') sind vorzugsweise fest mit dem Tubus verbunden (81). Das Umkehrsystem (76') ist quer zu der Längsachse (72) bewegbar (89).

## Beschreibung

Die Erfindung betrifft ein Fernglas mit mindestens einem Tubus, bei dem in dem Tubus entlang dessen Längsachse hintereinander mindestens drei optische Elemente, nämlich ein Objektiv, ein Umkehrsystem, sowie ein Okular angeordnet sind, und mit Mitteln zum Ausgleich von Verwacklungen des Tubus durch Bewegen mindestens eines der optischen Elemente relativ zum Tubus.

Ein Fernglas der vorstehend genannten Art ist aus der US 4,235,506 A bekannt.

Eine freihändige Beobachtung eines Objektes mit einem monokularen oder einem binokularen Fernglas, d.h. eine Beobachtung ohne Abstützung durch ein Stativ oder dgl., birgt immer die Gefahr von Bildverwacklungen. Die Ursache für die Verwacklungen können zum einen beim Benutzer liegen, beispielsweise infolge von Handzittern oder durch Bewegungsunruhe nach anstrengender Körperbetätigung, z.B. beim Bergwandern. Zum anderen können aber auch externe Einflüsse zu Verwacklungen führen, beispielsweise ein schwankender oder vibrierender Untergrund eines Land-, Wasser- oder Luftfahrzeugs oder die Kraft eines starken Windes.

Dies hat zur Folge, dass trotz hoch entwickelter optischer Abbildungssysteme die theoretische Auflösung und Detailerkennbarkeit am beobachteten Objekt in der Praxis bei derartigen Störeinflüssen nicht ausgenutzt werden kann.

Es hat sich gezeigt, dass von den sechs möglichen Bewegungen eines Fernglases, nämlich den drei Linearbewegungen entlang der Achsen eines kartesischen Koordinatensystems sowie den drei Drehungen um diese Achsen, im wesentlichen nur die Drehbewegungen um die beiden zur optischen Achse (Blickrichtung) senkrechten Achsen, d.h. die Drehbewegungen um die Hochachse und um die Querachse, verantwortlich sind.

Um die vorstehende erläuterten Probleme zu vermeiden, sind zahlreiche Vorschläge bekannt geworden. Einige bekannte Vorschläge beruhen darauf, optische Elemente im Strahlengang des Fernglases beweglich zu lagern und mittels Trägheitsvorrichtungen zu stabilisieren, beispielsweise mittels eines Kreisels.

Diese bekannten Vorschläge haben den Nachteil, dass relativ große Massen vorgesehen bzw. bewegt werden müssen. Derartige Ferngläser sind daher relativ schwer und müssen mit hoher mechanischer Präzision gefertigt werden.

Bei binokularen Ferngläsern ergibt sich das zusätzliche Problem, dass die Stabilisierungsmaßnahmen in beiden Tuben des Fernglases koordiniert werden müssen.

Bei jüngeren Vorschlägen wird anstatt der oben geschilderten rein mechanischen und passiven Stabilisierung eine aktive Stabilisierung verwendet. Dabei erfassen Sensoren die Verwacklungsbewegung des Tubus bzw. der Tuben. Eine elektronische Lageregelung kompensiert dann die Bewegungen des Tubus mittels Aktuatoren durch eine gegenläufige Bewegung von optischen Elementen im Strahlengang des Fernglases.

Aus der eingangs genannten US 4,235,506 ist ein binokulares Fernglas bekannt. Bei diesem Fernrohr ist in jedem Tubus ein Umkehrsystem in Gestalt eines Prismas angeordnet. Die beiden Prismen sind kardanisch aufgehängt.

Dieses Fernglas hat den Nachteil, dass eine Kompensation von Verwacklungsbewegungen nicht immer optimal gelingt.

Der Erfindung liegt die Aufgabe zugrunde, ein Fernglas der eingangs genannten Art bereitzustellen, bei dem die vorstehend genannten Nachteile vermieden werden. Insbesondere soll ein Fernglas geschaffen werden, das eine wirksame Kompensation von Verwacklungsbewegungen ermöglicht.

Bei einem Fernglas der eingangs genannten Art wird diese Aufgabe erfindungsgemäß dadurch gelöst, dass das Objektiv und das Okular vorzugsweise fest mit dem Tubus verbunden sind, und dass das Umkehrsystem quer zu der Längsachse bewegbar ist.

Die der Erfindung zugrunde liegende Aufgabe wird damit vollkommen gelöst.

Die vorgenannten Anordnung des zu Kompensationszwecken bewegten Umkehrsystems hat sich nämlich als besonders wirksam erwiesen. Die Anordnung ist verhältnismäßig einfach zu fertigen und zeichnet sich durch geringes Gewicht aus.

Im Rahmen der Erfindung sind sowohl passive als auch aktive Systeme einsetzbar. Es kann daher die Bewegung des mindestens einen optischen Elements passiv durch Trägheitskräfte bewirkt werden und/oder aktiv durch Aktuatoren.

Weitere Vorteile ergeben sich aus der Beschreibung und der beigefügten Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der zeichnung dargestellt und werden in der nachfolgenden Beschreibung näher erläutert. Es zeigen:
- Figur 1:: eine äußerst schematisierte und perspektivische Darstellung eines Fernglases, wie es im Rahmen der vorliegenden Erfindung verwendbar ist;
- Figur 2:: eine Seitenansicht eines ersten Ausführungsbeispiels der im Rahmen der vorliegenden Erfindung betroffenen optischen Elemente des Fernglases gemäß Figur 1, in einem ungestörten zustand;
- Figur 3:: die Ansicht von Figur 2, jedoch in einem durch Verwackeln gestörten zustand;
- Figur 4:: eine Seitenansicht eines zweiten Ausführungsbeispiels der im Rahmen der vorliegenden Erfindung betroffenen optischen Elemente des Fernglases gemäß Figur 1, in einem ungestörten zustand;
- Figur 5:: die Ansicht von Figur 4, jedoch in einem durch Verwackeln gestörten zustand;
- Figur 6:: eine Seitenansicht eines dritten Ausführungsbeispiels der im Rahmen der vorliegenden Erfindung betroffenen optischen Elemente des Fernglases gemäß Figur 1, in einem ungestörten zustand; und
- Figur 7:: die Ansicht von Figur 6, jedoch in einem durch Verwackeln gestörten zustand.

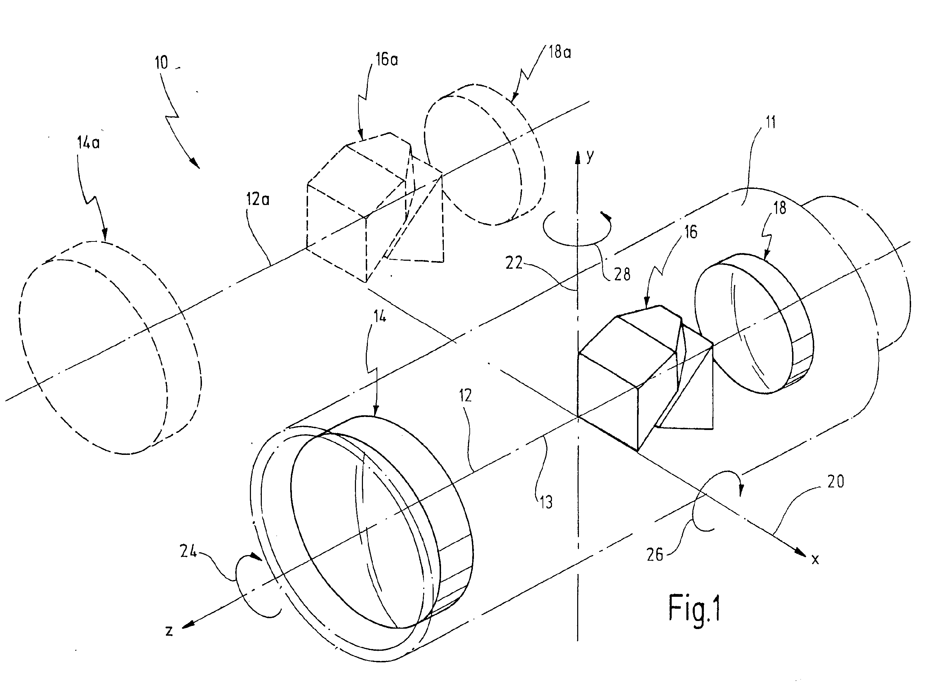

In Figur 1 bezeichnet 10 insgesamt ein Fernglas. Das Fernglas 10 kann ein monokulares Fernglas sein, wie mit durchgezogenen Linien dargestellt, oder ein binokulares Fernglas, wie zusätzlich gestrichelt angedeutet. Im folgenden soll der Einfachheit halber für die nachfolgende Beschreibung von Ausführungsbeispielen der Erfindung von einem monokularen Fernglas ausgegangen werden, ohne dass dies die Erfindung einschränkt.

Das Fernrohr 10 weist einen bei 11 angedeuteten Tubus auf. Der Tubus 11 hat eine Längsachse 12, die auch als z-Achse bezeichnet wird.

Figur 1 zeigt einen ungestörten Zustand des Fernglases 10, in dem keine Verwacklungsbewegung stattfindet. In diesem Zustand fällt eine optische Achse 13 mit der Längsachse 12 zusammen. In dem Tubus 11 sind hintereinander entlang der Achsen 12, 13 mindestens drei optische Elemente angeordnet, nämlich von der Objektseite her ein Objektiv 14, ein Umkehrsystem 16 sowie ein Okular 18. Das Umkehrsystem ist in allen dargestellten Ausführungsbeispielen beispielhaft als Pechan-Prismenanordnung ausgebildet. Bei Ausführungsbeispielen der Erfindung kann in vorteilhafter Weise auch noch ein viertes optisches Element, nämlich ein weiteres Prisma (nicht dargestellt), zwischen Umkehrsystem 16 und Okular 18 vorgesehen sein, das eine Verstellung des Okularabstandes gestattet.

In Figur 1 sind neben der bereits erwähnten Längs- oder z-Achse 12 noch eine Quer- oder x-Achse 20, sowie eine Hoch- oder y-Achse 22 eingezeichnet. Das Fernglas kann in dieser Notation Linearbewegungen entlang dieser drei kartesischen Koordinatenrichtungen ausführen. Hinzu kommen noch drei Drehbewegungen um die erwähnten Achsen 12, 20 und 22, wie mit Pfeilen 24, 26 und 28 angedeutet. In der Praxis machen sich hinsichtlich der von Verwacklungsbewegungen verursachten Störungen im wesentlichen die mit den Pfeilen 26 und 28 angedeuteten Drehbewegungen um die x-Achse 20 sowie die y-Achse 22 bemerkbar.

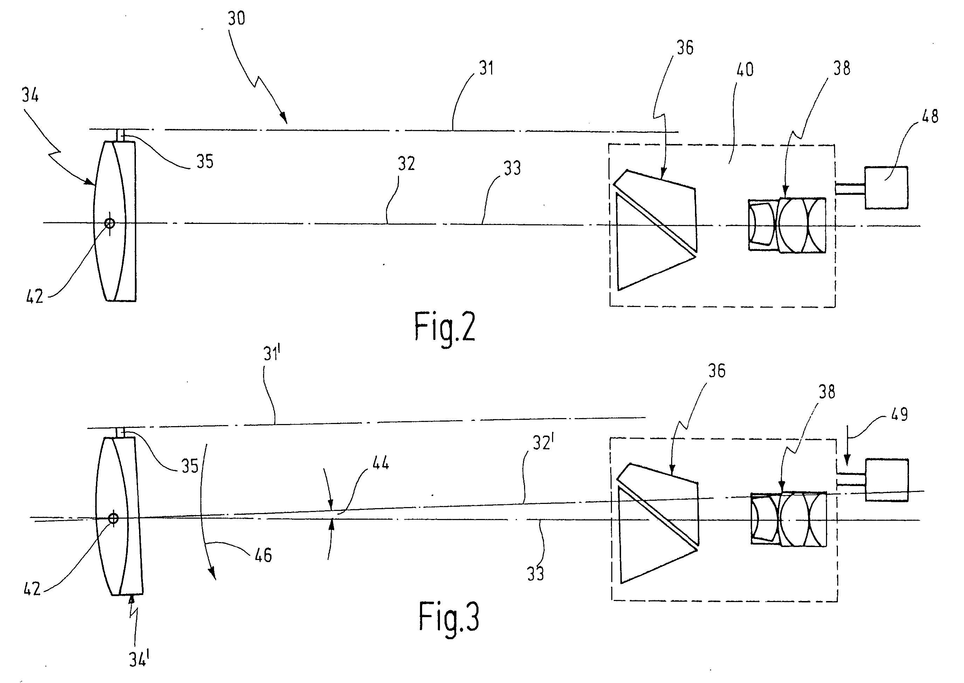

In den Figuren 2 und 3 ist ein erstes Ausführungsbeispiel der Erfindung dargestellt.

Ein Fernglas 30 weist einen nur angedeuteten Tubus 31 auf, dessen Längsachse bei 32 gezeigt ist. Eine optische Achse ist mit 33 bezeichnet. In dem Tubus 31 ist wiederum ein Objektiv 34 angeordnet, das mittels eines Verbindungselementes 35, beispielsweise einer geeigneten Fassung, fest mit dem Tubus 31 verbunden ist. Hinter dem Objektiv 34 befindet sich ein Umkehrsystem 36 und dahinter wiederum ein Okular 38.

Das Umkehrsystem 36 und das Okular 38 bilden eine Baueinheit 40, d.h., sie sind starr miteinander verbunden und gemeinsam bewegbar. Die Baueinheit 40 mit dem Umkehrsystem 36 und dem Okular 38 definieren bei diesem Ausführungsbeispiel die optische Achse 33.

Die Baueinheit 40 ist über einen nicht dargestellten Hebel in einem Drehpunkt 42 gelagert. Der Drehpunkt 42 befindet sich auf der Längsachse 32, und zwar im Knotenpunkt des Objektivs 34. Die Lagerung in dem Drehpunkt 42 ist kardanisch und gestattet eine Drehung der Baueinheit 40 um die x-Achse 20 sowie die y-Achse 22. Die Baueinheit 40 kann auch nur teilweise kardanisch gelagert sein, beispielsweise sämtliche Komponenten des Umkehrsystems 36 und des Okulars 38, mit Ausnahme der letzten Linse.

Figur 2 zeigt den ungestörten Zustand, in dem die optische Achse 33 mit der Längsachse 32 des Tubus 31 zusammenfällt.

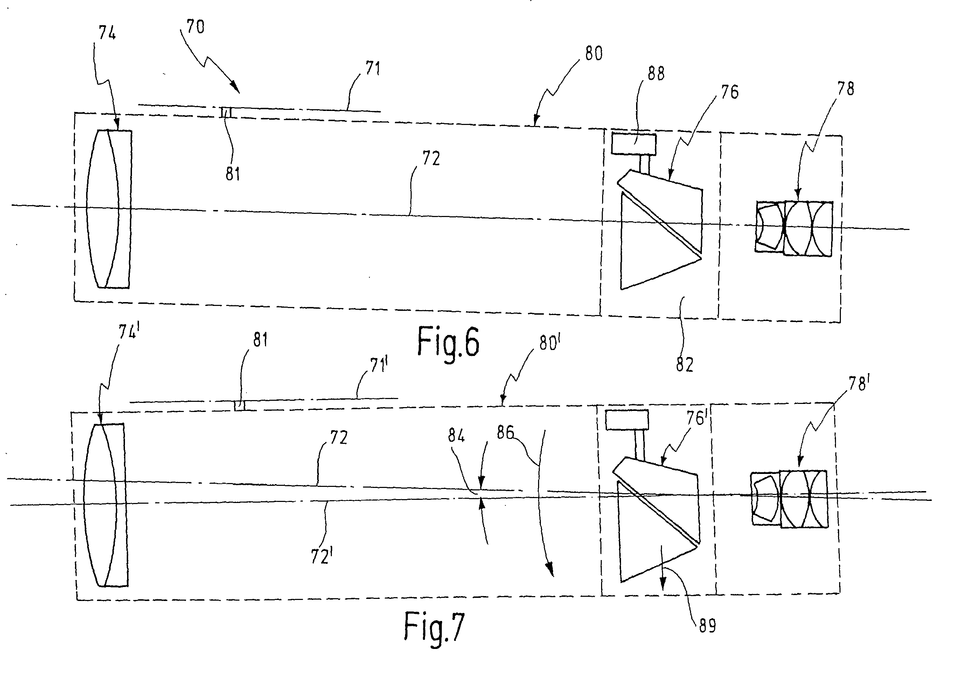

Figur 3 zeigt hingegen einen gestörten Zustand, in dem eine Verwacklungsbewegung eine Drehung des Tubus 31 um die x-Achse 20 bewirkt hat. Bei 44 ist der Drehwinkel eingezeichnet, der beispielsweise etwa 2° beträgt. Der gestörte Zustand ist in Figur 3, ebenso wie in den Figuren 5 und 7 durch Hinzufügen eines Apostroph bei den Bezugszeichen der betroffenen Bauteile symbolisiert.

Infolge der Drehung kippt das Fernglas 30 mit dem Tubus 31 um den Winkel 44 vorne nach unten weg, wie mit einem Pfeil 46 angedeutet. Damit wird die Längsachse 32 nach 32' verschwenkt. Die in dem Drehpunkt 42 kardanisch gelagerte Baueinheit 40 mit dem Umkehrsystem 36 und dem Okular 38 behält hingegen ihre Ausrichtung unverändert bei und kompensiert auf diese Weise die Verwacklungsbewegung.

Dies wird bei einer ersten Variante dieses Ausführungsbeispiels passiv erreicht, indem entsprechende träge Massen gefedert gelagert werden und die Baueinheit 40 bereits infolge dieser Massenträgheit ihre Ausrichtung beibehält.

Bei einer zweiten Variante hingegen wird die Verwacklungsbewegung über entsprechende Sensoren (nicht dargestellt) erfasst und ausgewertet. Mittels Aktuatoren, von denen in den Figuren 2 und 3 nur einer bei 48 angedeutet ist, wird eine Kompensationsbewegung für die Baueinheit 40 ausgeführt, wie mit einem Pfeil 49 gezeigt.

Die aktive und die passive Vorgehensweise können auch in geeigneter Weise miteinander kombiniert werden.

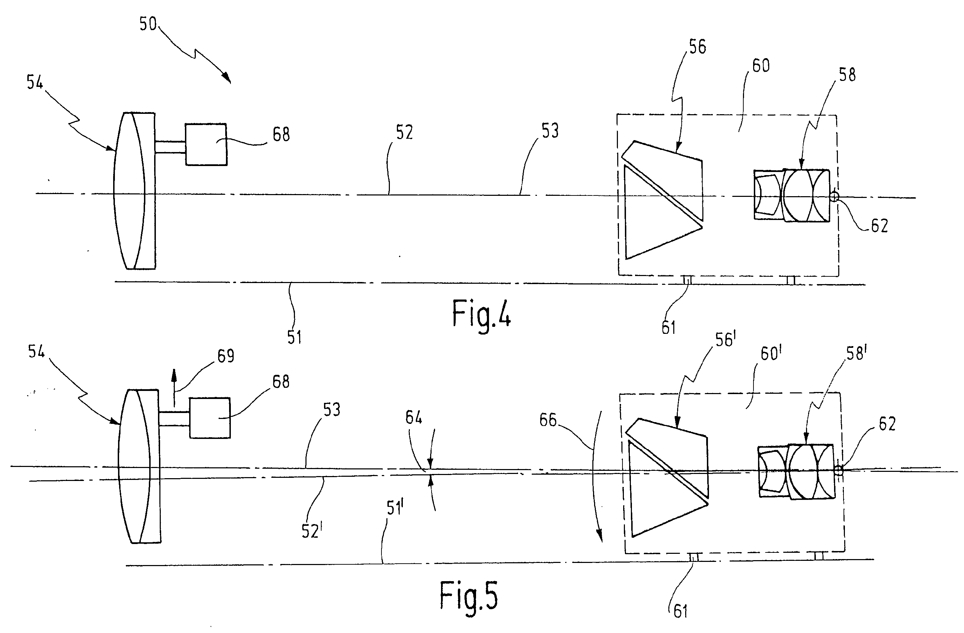

In den Figuren 4 und 5 ist ein zweites Ausführungsbeispiel der Erfindung dargestellt.

Ein Fernglas 50 weist einen nur angedeuteten Tubus 51 auf, dessen Längsachse bei 52 gezeigt ist. Eine optische Achse ist mit 53 bezeichnet. In dem Tubus 51 ist wiederum ein Objektiv 54 angeordnet. Hinter dem Objektiv 54 befindet sich ein Umkehrsystem 56 und dahinter wiederum ein Okular 58.

Bei diesem Ausführungsbeispiel ist das Objektiv 54 nicht fest mit dem Tubus 51 verbunden. Es definiert hier jedoch die optische Achse 53. Das Umkehrsystem 56 und das Okular 58 bilden auch hier eine gemeinsame Baueinheit 60, die mittels eines Verbindungselementes 61 fest mit dem Tubus 51 verbunden ist.

Das Objektiv 54 ist über einen nicht dargestellten Hebel in einem Drehpunkt 62 gelagert. Der Drehpunkt 62 befindet sich auf der Längsachse 52, und zwar im Bereich des Okulars 58, vorzugsweise auf dessen vom Umkehrsystem 56 abgewandten Seite. Die Lagerung in dem Drehpunkt 62 ist kardanisch und gestattet eine Drehung des Objektivs 54 um die x-Achse 20 sowie die y-Achse 22. Auch für dieses Ausführungsbeispiel gilt, dass das kardanisch gelagerte Element, hier also das Objektiv 54, nur teilweise gelagert sein kann. Wenn das Objektiv 54 z.B. aus zwei Linsen besteht, kann es ausreichen, nur eine der beiden Linsen kardanisch zu lagern.

Figur 4 zeigt den ungestörten Zustand, in dem die optische Achse 53 mit der Längsachse 52 des Tubus 51 zusammenfällt. Figur 5 zeigt hingegen einen gestörten Zustand, in dem eine Verwacklungsbewegung eine Drehung des Tubus 51 um die x-Achse 20 bewirkt hat. Bei 64 ist der Drehwinkel eingezeichnet, der auch hier beispielsweise etwa 2° beträgt.

Infolge der Drehung kippt das Fernglas 50 mit dem Tubus 51 um den Winkel 64 vorne nach unten weg, wie mit einem Pfeil 66 angedeutet. Damit wird die Längsachse 52 nach 52' verschwenkt. Das in dem Drehpunkt 62 kardanisch gelagerte Objektiv 54 behält hingegen seine Ausrichtung unverändert bei und kompensiert auf diese Weise die Verwacklungsbewegung.

Auch bei diesem Ausführungsbeispiel kann passiv und/oder aktiv kompensiert werden. die für den letzteren Fall erforderlichen Aktuatoren für das Verdrehen des Objektivs 54 sind bei 68, 69 angedeutet.

In den Figuren 6 und 7 ist schließlich noch ein drittes Ausführungsbeispiel der Erfindung dargestellt.

Ein Fernglas 70 weist einen nur angedeuteten Tubus 71 auf, dessen Längsachse bei 72 gezeigt ist. Eine optische Achse ist mit 73 bezeichnet. In dem Tubus 71 ist wiederum ein Objektiv 74 angeordnet. Hinter dem Objektiv 74 befindet sich ein Umkehrsystem 76 und dahinter wiederum ein Okular 78.

Bei diesem Ausführungsbeispiel bilden das Objektiv 74 und das Okular 78 eine gemeinsame Baueinheit 80, die mittels eines Verbindungselementes 81 fest mit dem Tubus 71 verbunden ist. Die Baueinheit 80 definiert hier die optische Achse 83. Das Umkehrsystem 76 befindet sich in einem Abteil 82 der Baueinheit 80.

Das Umkehrsystem 76 ist in dem Abteil 82 gleitend gelagert. Die Lagerung gestattet eine Verschiebung des Umkehrsystems 76 entlang der x-Achse 20 sowie der y-Achse 22.

Figur 6 zeigt den ungestörten Zustand, in dem die optische Achse 73 mit der Längsachse 72 des Tubus 71 zusammenfällt. Figur 7 zeigt hingegen einen gestörten zustand, in dem eine Verwacklungsbewegung eine Drehung des Tubus 71 um die x-Achse 20 bewirkt hat. Bei 84 ist der Drehwinkel eingezeichnet, der auch hier beispielsweise etwa 2° beträgt.

Infolge der Drehung kippt das Fernglas 70 mit dem Tubus 71 um den Winkel 84 vorne nach unten weg, wie mit einem Pfeil 86 angedeutet. Damit wird die Längsachse 72 nach 72' verschwenkt. Das in dem Abteil 82 verschiebbar gelagerte Umkehrsystem 76 wird nun in x- und/oder in y-Richtung verschoben und kompensiert auf diese Weise die Verwacklungsbewegung.

Auch bei diesem Ausführungsbeispiel kann passiv und/oder aktiv kompensiert werden. die für den letzteren Fall erforderlichen Aktuatoren für das Verschieben des Umkehrsystems 76 sind bei 88, 89 angedeutet.

## Patentansprüche

1. Fernglas mit mindestens einem Tubus (11; 31; 51; 71), bei dem in dem Tubus (11; 31; 51; 71) entlang dessen Längsachse (12; 32; 52; 72) hintereinander mindestens drei optische Elemente, nämlich ein Objektiv (14; 34; 54; 74), ein Umkehrsystem (16; 36; 56; 76), sowie ein Okular (18; 38; 58; 78) angeordnet sind, und mit Mitteln zum Ausgleich von Verwacklungen des Tubus (11; 31; 51; 71) durch Bewegen mindestens eines der optischen Elemente relativ zum Tubus (11; 31; 51; 71), **dadurch gekennzeichnet, dass** das Objektiv (74) und das Okular (78) vorzugsweise fest mit dem Tubus (71) verbunden (81) sind, und dass das Umkehrsystem (76) quer zu der Längsachse (72) bewegbar (89) ist.

2. Fernglas nach Anspruch 1, **dadurch gekennzeichnet, dass** die Bewegung des Umkehrsystems (76) passiv durch Trägheitskräfte bewirkt wird.

3. Fernglas nach Anspruch 1 oder 2, **dadurch gekennzeichnet, dass** die Bewegung des Umkehrsystems (76) aktiv durch Aktuatoren (88) bewirkt wird.
